# EUROPÄISCHE PATENTANMELDUNG

(11) **EP 1 752 031 A1**
(43) Veröffentlichungstag der Anmeldung: **14.02.2007**
(21) Anmeldenummer: 06016057.9
(22) Anmeldetag: 02.08.2006
(51) Int. Cl.: A01C 7/08, A01B 69/02, A01C 5/06

(54) **Sämaschine**

(30) Priorität: 10.08.2005 DE 102005038096
(71) Anmelder: Amazonen-Werke H. Dreyer GmbH & Co. KG, 49205 Hasbergen (DE)
(72) Erfinder: Feldhaus, Werner, 27801 Dötlingen/Geveshausen (DE); Steen, Rüdiger, 27798 Hude (DE); Brook, Gebhard, 49429 Visbek (DE)

(57) **Zusammenfassung**

Sämaschine mit einem Vorratsbehälter aus dem das Saatgut über Dosiereinrichtungen in einstellbaren Mengen über in Querreihen angeordneten Säschare (2) dem Boden zugeführt wird und bei der zur Schaffung von Fahrgassen für die Laufräder eines landwirtschaftlichen Fahrzeugs innerhalb der Arbeitsbreite der Sämaschine Streifen von dem auszubringenden Saatgut in einer periodischen Wiederkehr freigehalten werden und bei der zur Erkennung der Fahrgassen diese Fahrgassen gegenüber den mit Saatgut besäten Bereich erkennbar markiert werden, wobei hinter den Säscharen (2) Saatbedeckungselemente (3), wie Striegel und/oder Saatandruckrollen angeordnet sind. Um in einfacher Weise zu ermöglichen, dass beim Anlegen der Fahrgassen die von Saatgut freigehaltenen Bereiche in einfacher Weise ohne zusätzliche in den Boden eingreifenden Elemente markiert werden, ist vorgesehen, dass beim Anlegen der Fahrgassen die Saatbedeckungselemente (3) im Bereich der Fahrgassen vom Boden abgehoben werden. Infolge dieser Maßnahmen werden durch das Anheben der Saatbedeckungselemente (3) im Bereich der Fahrgassen diese Bereiche anders hinterlassen als die Bereiche auf denen die Saatbedeckungselemente (3) auf dem Boden abrollen oder in den Boden eingreifen. Es gibt sich also unterschiedlich gekennzeichnete Bereiche, so dass die nicht Saatgut bedeckten Bereiche, nämlich die Fahrgassen von den übrigen Bereichen zu erkennen sind.

## Beschreibung

Die Erfindung betrifft eine Sämaschine gemäß des Oberbegriffes des Patentanspruches 1.

Eine derartige Sämaschine ist beispielsweise in der DE 26 59 523 beschrieben. Bei dieser Sämaschine sind hinter den Säscharen und den als Striegelelementen ausgebildeten Saatbedeckungselementen Markierungsscheiben zum Markieren der Spuren, die von Saatgut zur Schaffung von Fahrgassen freigehalten werden, angeordnet. Derartige zusätzliche Markierungselemente, die als schräg zur Fahrtrichtung angestellte Scheiben ausgebildet sind, haben sich in der Praxis bewährt. Es ist jedoch nachteilig, dass zur Markierung der Fahrgassen zusätzliche Elemente verwendet werden müssen.

Der Erfindung liegt die Aufgabe zugrunde, in einfacher Weise zu ermöglichen, dass beim Anlegen der Fahrgassen die von Saatgut freigehaltenen Bereiche in einfacher Weise ohne zusätzliche in den Boden eingreifenden Elemente markiert werden.

Diese Aufgabe wird erfindungsgemäß dadurch gelöst, dass beim Anlegen der Fahrgassen die Saatbedeckungselemente im Bereich der Fahrgassen vom Boden abgehoben werden. Infolge dieser Maßnahmen werden durch das Anheben der Saatbedeckungselemente im Bereich der Fahrgassen diese Bereiche anders hinterlassen als die Bereiche auf denen die Saatbedeckungselemente auf dem Boden abrollen oder in den Boden eingreifen. Es geben sich also unterschiedlich gekennzeichnete Bereiche, so dass die nicht Saatgut besäten Bereiche, nämlich die Fahrgassen.von den übrigen Bereichen unterscheidbar zu erkennen sind.

Weiterhin ist es möglich, die Markierung bzw. die unterschiedliche Kennzeichnung auch zu erreichen, wenn hinter den Säscharen Saatandruckrollen angeordnet sind. Zur Markierung bzw. das unterschiedliche Kennzeichnen der verschiedenen Bereiche, in denen Saatgut abgelegt und in den kein Saatgut (Fahrgassen) abgelegt ist, also unterscheidbar zu machen, ist vorgesehen, dass die Saatandruckrollen an einem quer zur Fahrtrichtung verlaufenden Querbalken angeordnet sind, dass in dem Bereich der Säschare, die die Fahrgassen anlegen, die Saatandruckrollen an einem am Querbalken bewegbar angeordneten Halter angeordnet sind, dass dieser Halter mit den Saatandruckrollen, die im Bereich der Säschare, die die Fahrgassen anlegen, angeordnet sind, mittels eines motorischen Stellelementes, welches zwischen dem Querbalken und dem Halter angeordnet ist, vom Boden abhebbar und gegen den Boden absenkbar sind.

In einfacher Weise lassen sich die Elemente zum Kennzeichnen der Fahrgassen mit der Vorrichtung zum Anlegen der Fahrgassen koppeln, so dass automatisch, wenn Fahrgassen angelegt werden, auch die Elemente zum Kennzeichnen der Fahrgassen vom Boden abgehoben werden.

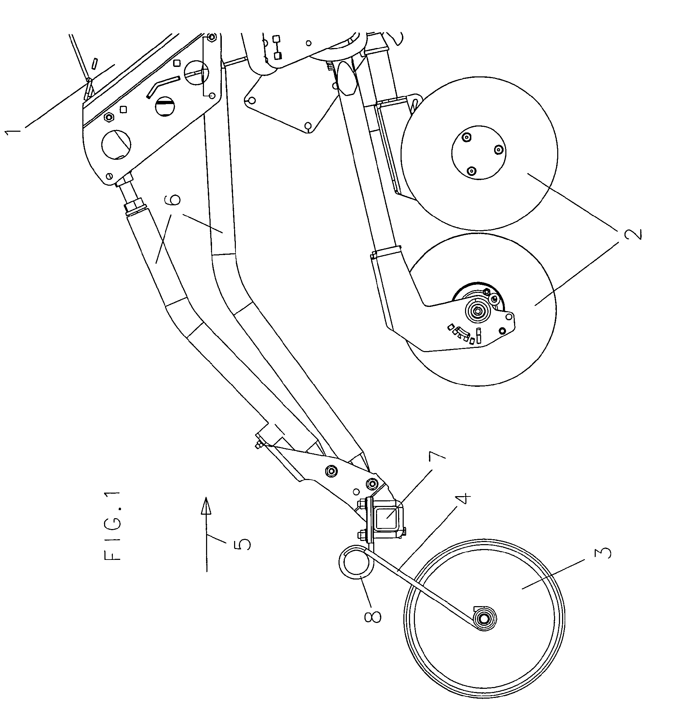

Weitere Einzelheiten der Erfindung sind der Beispielsbeschreibung und den Zeichnungen zu entnehmen. Hierbei zeigen
- Fig. 1: die Sämaschine in Teilansicht mit hinter den Säscharen angeordneten Rollen in Seitenansicht,

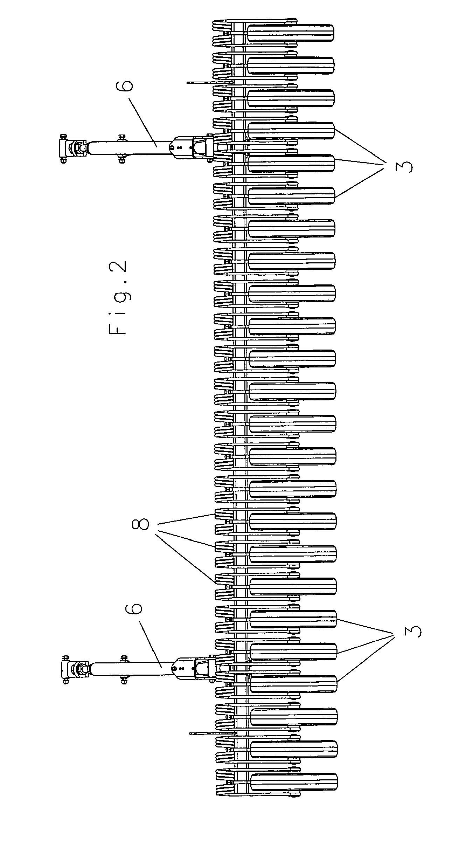

- Fig. 2: die Rollen in der Ansicht von hinten,
- Fig. 3: die Anordnung der Rollen in Seitenansicht, wobei die Rollen im Bereich der Fahrgassen vom Boden abgehoben sind,
- Fig. 4: die Anordnung der Rollen in der Ansicht von hinten, wobei die Rollen im Bereich der Fahrgassen vom Boden abgehoben sind,
- Fig. 5: die Anordnung der Rollen in perspektivischer Darstellung, wobei die Rollen im Bereich der Fahrgassen vom Boden abgehoben sind,

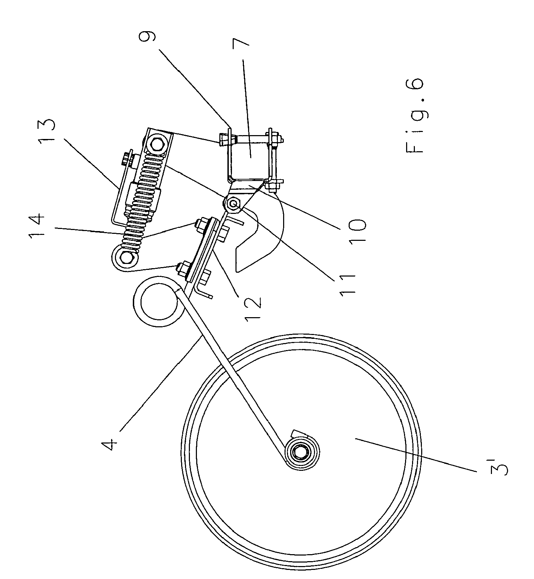

- Fig. 6: die Anordnung der vom Boden aushebbaren Rollen in Seitenansicht und vergrößerter Darstellung,

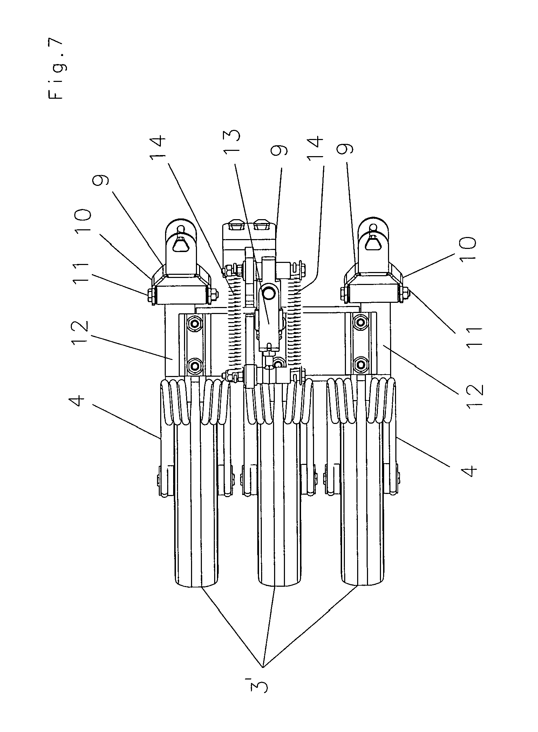

- Fig. 7: die Anordnung der vom Boden abhebbaren Rollen in der Draufsicht und

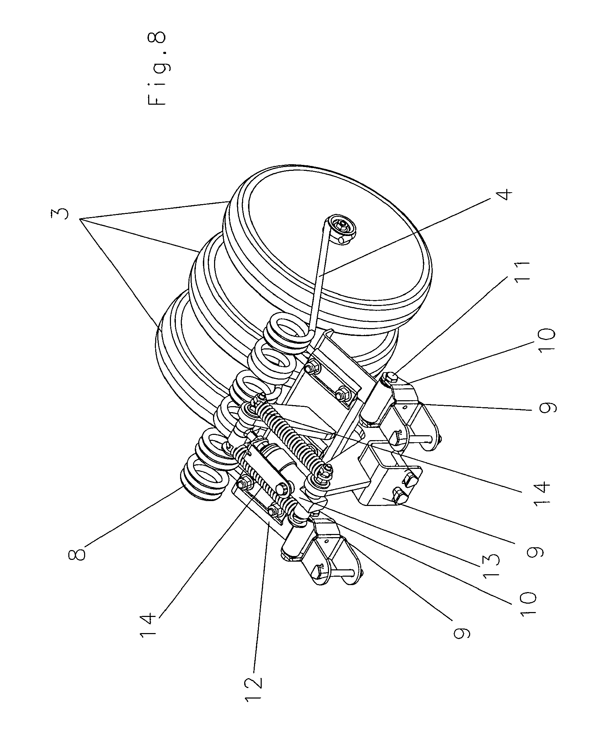

- Fig. 8: die vom Boden abhebbaren Rollen in Seiteansicht.

Die Sämaschine weist den Rahmen 1 mit dem Vorratsbehälter auf. An dem Rahmen 1 sind in zwei Querreihen hintereinander und seitlich versetzt zueinander die Säschare 2 angeordnet. Den Säscharen 2 wird über Saatleitungen und Dosierorganen das sich im Vorratsbehälter befindliche Saatgut in einstellbaren Mengen zugeleitet. Hinter den Säscharen 2 sind die Saatandruckrollen 3 in eine Querreihe hintereinander angeordnet. Diese auf dem Boden abrollenden scheibenartigen Rollen 3 sind nebeneinander und beabstandet zueinander angeordnet und über einen federnden Tragarm 4 an einem quer zur Fahrtrichtung 5 verlaufenden und über das Verbindungsgestänge 6 an dem am Rahmen 1 befestigten Querträger 7 angeordnet. Die Rollen 3 sind, in Ansicht von hinten gesehen, fluchtend zu den Säscharen 2 angeordnet, so dass jeweils eine Rolle 3 einem Säschar 2 zugeordnet ist und die von den in den Säscharen 2 gezogenen Säfurche abgelegten Saatkörner andrücken. Aufgrund der Federwindung 8 in dem Tragarm 4 und der Anordnung des Querträgers 7 über das Verbindungsgestänge 6 an dem Rahmen 1 sind die Rollen 3 mit einer Vorspannung gegen den Boden angeordnet.

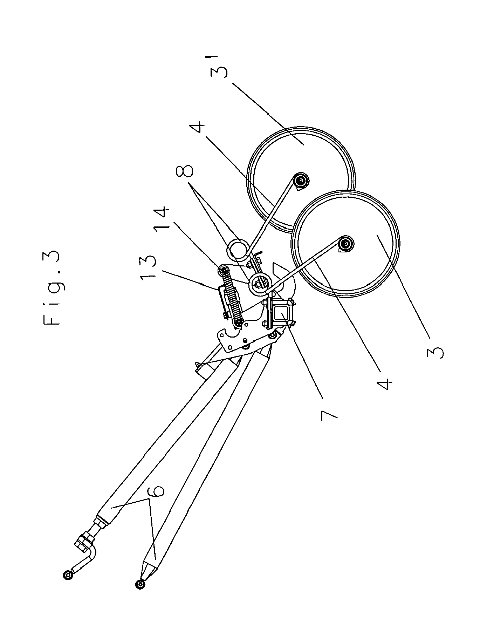

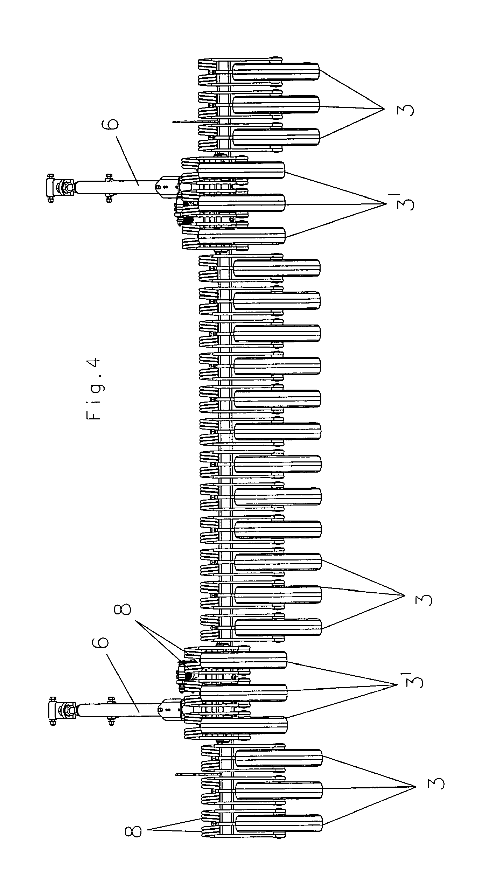

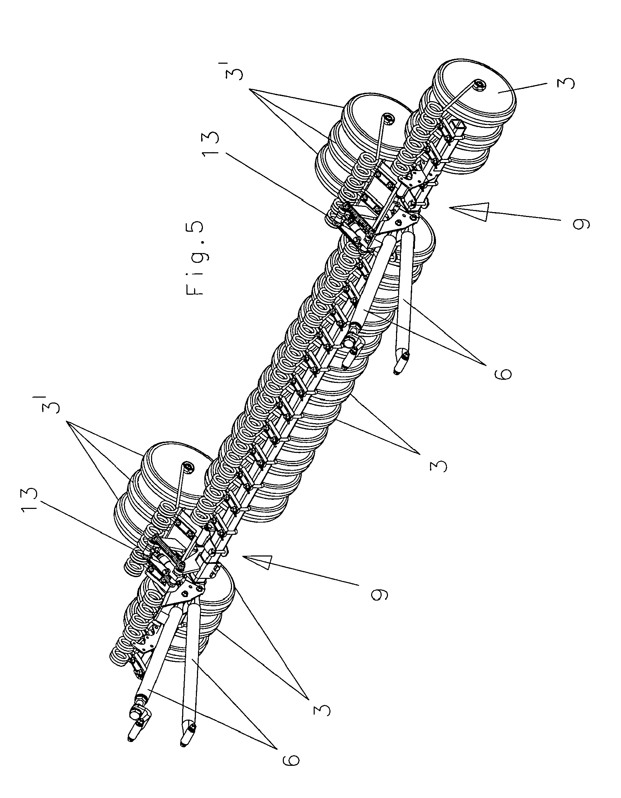

Die Sämaschine weist Dosiereinrichtungen auf, über welche das Saatgut in einstellbaren Mengen den Säscharen 2 zugeführt wird. Weiterhin ist der Sämaschine eine Vorrichtung zur Schaffung von Fahrgassen für die Laufräder eines landwirtschaftlichen Fahrzeugs innerhalb der Arbeitsbreite der Sämaschine zugeordnet, in dem Streifen von dem auszubringenden Saatgut in einer periodischen Widerkehr freigehalten werden. Diese von Saatgut freigehaltenen Streifen, nämlich die Fahrgassen sollen zur Erkennung der Fahrgassen gegenüber dem mit Saatgut besäten Bereichen erkennbar markiert werden, um diese Fahrgassen vor dem Auflaufen des ausgebrachten Saatgutes erkennen und dann befahren zu können. Hierzu sind in dem Bereich, in denen den Säscharen 3 zum Anlegen von Fahrgassen in periodischer Widerkehr keine Saatgut zugeführt wird, vom Boden abhebbare Saatbedeckungsrollen 3' zugeordnet. Beim Anlagen der Fahrgassen werden diese als Saatandruckrollen 3' ausgebildeten Saatbedeckungselemente im Bereich der Fahrgassen vom Boden abgehoben, wie Fig. 3 und 4, sowie 5 zeigen. Die Saatbedeckungselemente können auch als Saatstriegel ausgebildet sein.

Um diese Saatandruckrollen 3, die hinter den Säscharen 2, denen zum Anlegen der Fahrgassen kein Saatgut zugeführt wird, vom Boden abzuheben, sind diese Saatandruckrollen 3' mittels einer separaten Halterung 9 am Querträger 7 angeordnet.

Diese Halterung 9 weist einen Gelenkhalter 10 auf, an dem über die Gelenke 11 der um eine Gelenkachse, die parallel zur Längsachse des Querträgers 7 verläuft, der bewegbare bzw. verschwenkbare Rollenhalter 12 angeordnet ist. An diesem verschwenkbar angeordneten Rollenhalter sind die federnden Tragarme 4 der Rollen 3' angeordnet. Zwischen der am Querträger 7 befestigten Halterung 9 und dem schwenkbaren Rollenhalter 12 ist das als Hydraulikzylinder 13 ausgebildete motorische Element angeordnet, mittels welchem der Rollenhalter 12 mit den Rollen 3' nach unten verschwenkt und die Rollen 3' gegen den Boden gedrückt werden. Beim drucklos Schalten dieses Hydraulikzylinder 13 ziehen die parallel zu dem einfach wirkenden Hydraulikzylinder 13 angeordneten Federn 14, die zwischen dem Rollenhalter 12 und der Halterung 9 angeordnet sind, den Rollenhalter 12 mit den daran angeordneten Rollen 3' in die vom Boden abgehobene Stellung, wie die Fig. 3-5 zeigen.

Der Hydraulikzylinder 13 ist mit der Vorrichtung zum Anlegen der Fahrgassen gekoppelt, so dass automatisch beim Abschalten der Dosierorgane, wenn den im Bereich der Fahrgassen angeordneten Säschare kein Saatgut zugeführt wird, die Rollen 3' vom Boden abgehoben werden, und beim wieder zuführen des Saatgutes zu den in der Fahrgasse angeordneten Säscharen diese Rollen 3' wieder abgesenkt werden. Somit werden beim Anlegen der Fahrgassen, wenn die Rollen 3' vom Boden abgehoben sind, die Bereiche die besät sind, durch die Rollen 3 im besäten Bereich anders gekennzeichnet, bzw. markiert, als die Bereiche im Bereich der Fahrgassen, bei denen die. Rollen 3' vom Boden abgehoben sind. Somit gibt sich eine unterschiedliche Oberflächenstruktur, in dem die Rollen 3 im besäten Bereich auf dem Boden abrollen, während im nicht besäten Bereich die Rollen 3' vom Boden abgehoben sind.

Gleiches lässt sich auch dadurch erreichen, wenn keine Saatbedeckungselemente hinter den Säscharen 2 angeordnet sind, wenn die Säschare 2 selbst beim Anlegen von Fahrgassen, wenn also diesen Säscharen 2 kein Saatgut zugeführt wird, vom Boden abgehoben werden.

## Patentansprüche

1. Sämaschine mit einem Vorratsbehälter aus dem das Saatgut über Dosiereinrichtungen in einstellbaren Mengen über in Querreihen angeordneten Säschare dem Boden zugeführt wird und bei der zur Schaffung von Fahrgassen für die Laufräder eines landwirtschaftlichen Fahrzeugs innerhalb der Arbeitsbreite der Sämaschine Streifen von dem auszubringenden Saatgut in einer periodischen Wiederkehr freigehalten werden und bei der zur Erkennung der Fahrgassen diese Fahrgassen gegenüber den mit Saatgut besäten Bereich erkennbar markiert werden, wobei hinter den Säscharen Saatbedeckungselemente, wie Striegel und/oder Saatandruckrollen angeordnet sind, **dadurch gekennzeichnet, dass** beim Anlegen der Fahrgassen die Saatbedeckungselemente (3') im Bereich der Fahrgassen vom Boden abgehoben werden.

2. Sämaschine nach Anspruch 1, **dadurch gekennzeichnet, dass** die Säschare (2) im Bereich der Fahrgassen beim Anlegen der Fahrgassen vom Boden abgehoben werden.

3. Sämaschine nach einem oder mehreren der vorstehenden Ansprüche, **dadurch gekennzeichnet, dass** die Saatandruckrollen (3,3') an einem quer zur Fahrtrichtung verlaufenden Querbalken (7) angeordnet sind, dass in dem Bereich der Säschare (2), die die Fahrgassen anlegen, die Saatandruckrollen (3') an einem am Querbalken (7) bewegbar angeordneten Halter (12) angeordnet sind, dass dieser Halter (12) mit den Saatandruckrollen (3'), die im Bereich der Säschare (2), die die Fahrgassen anlegen, angeordnet sind, mittels eines motorischen Stellelementes (13,14), welches zwischen dem Querbalken (7) und dem Halter (12) angeordnet ist, vom Boden abhebbar und gegen den Boden absenkbar sind.

4. Sämaschine nach einem oder mehreren der vorstehenden Ansprüche, **dadurch gekennzeichnet, dass** das motorische Element (12) mit der Vorrichtung zum Anlegen der Fahrgassen gekoppelt ist.
